# EUROPEAN PATENT APPLICATION

(11) **EP 1 462 928 A2**
(43) Date of publication of application: **29.09.2004**
(21) Application number: 04250479.5
(22) Date of filing: 29.01.2004
(51) Int. Cl.: G06F 3/06

(54) **Method and apparatus for testing drive units for removable data storage media**

(30) Priority: 31.01.2003 GB 0302249
(71) Applicant: Hewlett-Packard Development Company, L.P., Houston, TX 77070 (US)
(72) Inventor: Crighton, Ian Peter, Winterbourne, Bristol BS36 1JS (GB); Evans, Rhys Wyn, Caerdydd, Wales CF23 5QP (GB); Wakelin, Duncan, Bishopston, Bristol BS7 9HR (GB)
(74) Representative: Marsh, David John

(57) **Abstract**

A method of operating an automated storage apparatus comprising at least one data transfer device for transferring data to and from data storage units, a robotic device for moving said data storage units, a holding area for holding said data storage units for which no data is presently required to be transferred thereto or therefrom, and a reference data storage unit held in said holding area, the method comprising: automatically, in response to receiving information indicative of an excessive error level in transferring data between one said data transfer device and a respective said data storage unit:
a) removing from said one data transfer device a presently inserted said data storage unit; and
b) inserting said reference unit in said one data transfer device for a reference transfer operation.

## Description

### FIELD OF THE INVENTION

The invention relates to automated storage apparatus and to a method of operating automated storage apparatus.

### BACKGROUND

Occasionally, an unusually and unacceptably high error rate occurs during the transfer of data between a data transfer device and a data storage unit removably inserted in the data transfer device. It is desirable to establish whether a cause of the fault lies in the transfer device or the storage unit, so that remedial action can be taken. However, it is generally not immediately evident whether the error is due to a fault in the transfer device or the storage unit, and establishing the location of the cause of the fault can be potentially time consuming and frustrating.

### SUMMARY OF THE INVENTON

In accordance with one aspect of the invention, there is provided a method of operating an automated storage apparatus comprising at least one data transfer device for transferring data to and from data storage units, a robotic device for moving said data storage units, a holding area for holding said data storage units for which no data is presently required to be transferred thereto or therefrom, and a reference data storage unit held in said holding area, the method comprising: automatically, in response to receiving information indicative of an excessive error level in transferring data between one said data transfer device and a respective said data storage unit:
a) removing from said one data transfer device a presently inserted said data storage unit; and
b) inserting said reference unit in said one data transfer device for a reference transfer operation.

In accordance with a further aspect of the invention, there is provided an automated digital data storage apparatus for moving digital data storage units between a holding area and at least one respective data transfer device for transferring data to and from said data storage units, said apparatus being adapted to:
a) hold and locate in said holding area a said data storage unit that is designated as a reference unit for diagnostic use, said unit comprising at least one reference storage portion having had a controlled number of previous transfer operations performed thereon; and
b) automatically, in response to receiving information indicative of an excessive error level in transferring data between one said data transfer device and a respective said data storage unit:
   i) remove from said one data transfer device a presently inserted said data storage unit;
   ii) insert said reference unit in said one data transfer device for a reference transfer operation.

In accordance with a still further aspect of the invention, there is provided an automated digital data storage apparatus for moving digital data storage units between a holding area and at least one respective data transfer device for transferring data to and from said data storage units, said holding area having a slot dedicated to receiving one of said storage units that is designated as a reference unit for diagnostic use, said reference unit comprising at least one reference storage portion having had a controlled number of previous transfer operations performed thereon, said apparatus being adapted to:
a) monitor an error level in data transferred between the or each said data transfer device and a respective said data storage unit;
b) automatically, in response to a said error level at one said transfer device exceeding a predetermined threshold:
   i) remove from said one data transfer device a presently inserted said data storage unit; and
   ii) insert in said one data transfer device said reference unit.

In accordance with a still further aspect of the invention, there is provided a method for use in an automated storage apparatus for moving digital data storage units relative to at least one digital data transfer device, the method comprising:
a) recognizing a designated one of said digital data storage units as a reference unit for diagnostic use, said unit comprising at least one storage portion; and
b) using a record of data transfer operation occurrences performed relative to the or each storage portion so as to limit a number of data transfer operations performed on the or each storage portion.

In accordance with a still further aspect of the invention, there is provided a digital data transfer device for transferring data to and from digital data storage units, said device being adapted to:
a) recognize a said digital data storage unit as a reference unit for diagnostic use, said reference unit comprising at least one storage portion;
b) access a record of data transfer operations performed relative to the or each said storage portion of said reference unit; and
c) use said record to limit a number of data transfer operations performed on each said storage portion.

In accordance with a still further aspect of the invention, there is provided a digital data storage reference unit comprising i) at least one reference data storage portion and ii) a record of a number of times a data transfer operation has been performed relative to the or each said storage portion, so as to enable maintenance of the or each said data storage portion in a predetermined reference condition.

### BRIEF DESCRIPTION OF THE DRAWINGS

In order that the invention may be well understood, by way of example only, various embodiments thereof will now be described with reference to the accompanying drawings, in which:
Figure 1 is a schematic representation of an automated digital data storage apparatus;
Figure 2 shows a digital data storage unit including a tape data storage medium and a fast access storage device;
Figure 3 is a schematic representation of a tape data storage medium of the unit of Figure 2;
Figure 4 shows a table of data stored on the storage unit;
Figure 5 is a schematic representation of an alternative tape data storage medium;
Figure 6 is a diagram illustrating a method of operating an automated storage apparatus;
Figure 7 illustrates a method for use in an automated storage apparatus; and
Figure 8 is a schematic representation of an alternative automated digital data storage apparatus.

### DETAILED DESCRIPTION

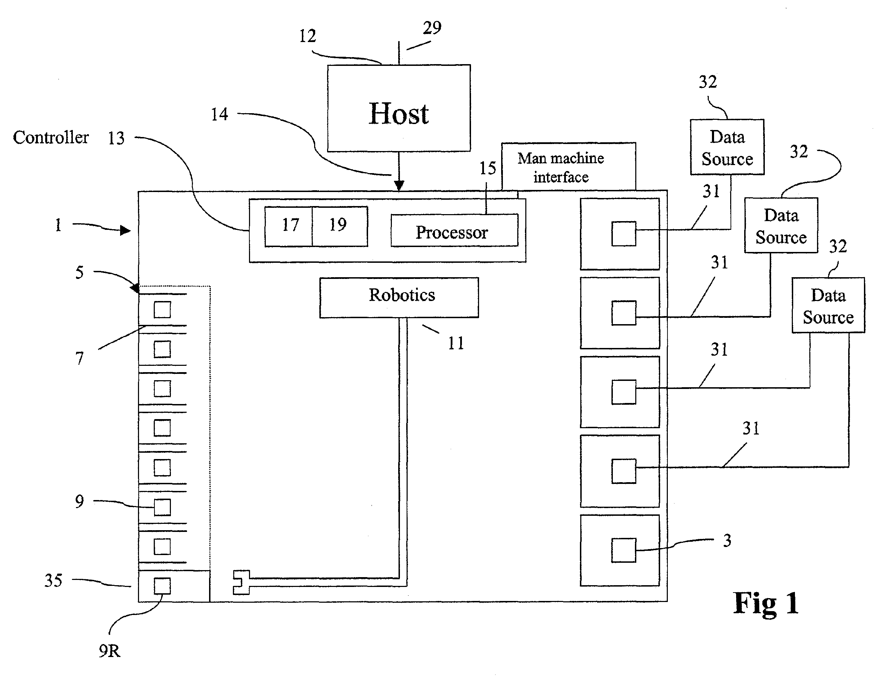

Figure 1 shows an automated data storage apparatus in the form of a tape library 1 having a plurality of data transfer devices in the form of tape drives 3 and a holding area 5 having a plurality of holding bays 7 comprising shelves or other tape library compartments. The drives 3 removably receive respective digital data storage units in the form of tape cartridges 9, for performing read and write operations to transfer data to and from the received cartridges 9. The holding bays 7 removably receive respective tape cartridges 9 for storing cartridges 9 that are not presently required for data transfer purposes.

The library 1 also has a robotic accessor apparatus 11 for moving the cartridges 9 between various physical locations in the holding area 5 and the data transfer devices 3, and inserting and/or removing the cartridges 9 at those locations as required. The accessor apparatus can be implemented by, for example, robotic arms, integrated loading equipment, conveyors, grippers movable on an x-y system, or any other suitable cartridge movement apparatus. The library 1 also allows cartridges to be input to or output from the library by some convenient means (not shown).

The library 1 is controlled by a library controller 13, for controlling the movement of cartridges between locations or addresses in the library 1. The controller 13 is conveniently connected to a man machine interface 16. The controller 13 receives movement control commands from a media server host 12, comprising at least one digital machine, through an input and/or output path 14. The host 12 is adapted to receive movement control requests along a communications path 29 and send out movement reporting signals along the path 29. The controller 13 is adapted, in response to receiving movement control commands from the host 12, to issue control signals to the accessor apparatus 11 to cause the accessor apparatus 11 to access cartridges 9 from selected physical locations or addresses (drives 3 or holding bays 7) in the library 1 and to move the cartridges 9 to other selected physical locations 3, 7 or addresses. The movement control requests received by the host 11 can relate to movement of cartridges 9 between logical (i.e. virtual) addresses, in which case the host 11 is adapted to translate the logical address to a physical addresses before instructing the controller 13.

The controller 13 and drives 3 are interconnected for communication therebetween by connections (not shown), for example in known fashion. The connections can, for example, take the form of serial link connections (such as the Automation Control Interface (ACI) in Hewlett-Packard Ultrium tape drives that accord with the well known Linear Tape Open (LTO) technology) for conveying movement requests and responses between the drives and the controller 13.

In the embodiment of Figure 1, the controller 13 comprises digital data processing apparatus including a digital data processor 15, fast access storage 17, for example random access memory (RAM), and non-volatile storage 19, for example electrically erasable programmable read only memory (EEPROM) or other suitable device. A program (not shown) is stored in the non-volatile storage 19, the program comprising sequences of machine readable instructions executable by the processor 15 to cause the library 1 to perform as described below.

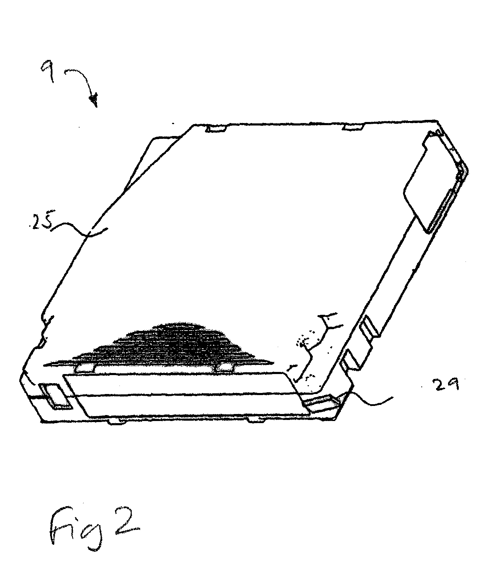

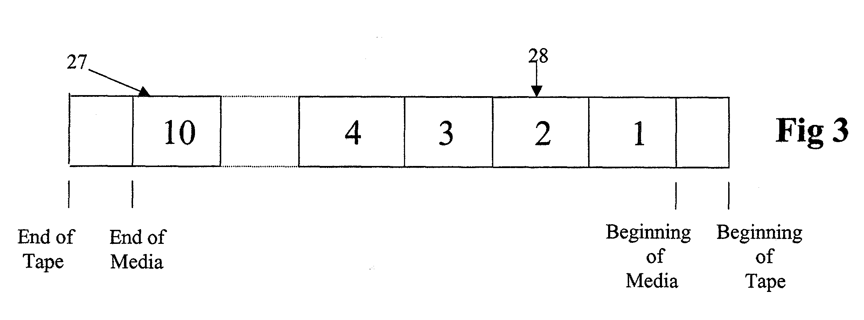

An exemplary one of the cartridges 9 is shown in Figure 2. The cartridge 9 comprises a casing 25 and, internally of the casing 25, one or a pair of reels (not shown) on which is wound an elongate band of magnetic tape 27 (Figure 3) constituting a high capacity data storage medium. When inserted in one of the tape drives 3, the magnetic tape 3 can be driven on the reel or reels to enable transfer of data to and/or from the tape as it passes magnetic read and/or write heads of the drive 3. The cartridge 9 and drives 3 of the present embodiment relate to linear tape technology, such as the LTO 2 standard for example, wherein a write and/or read pass is generally made in a direction of a longitudinal axis of the tape 27 and then continues if required in an opposite direction. However, alternative embodiments relate to other technologies, for example helical scan technology such as the DDS 4 standard, wherein a write and/or read pass is made in a direction laterally of the tape 27 at an angle to the longitudinal axis of the tape 27.

The cartridge 9 includes a fast access data storage device 29 in the form of a solid state programmable memory device. The memory device 29 can require contact with another device, for example a tape drive 3, for communicating with the other device, or can alternatively be contactless. For example, the memory device 29 of in Figure 2 is contactless and includes a transponder unit (not shown) and a non-volatile read/write memory that can be written to or read via the transponder unit. The transponder unit can be inductively powered by an RF signal generated by a transmitter, for example in a tape drive 3, when placed immediately adjacent the cartridge casing 25, as is known in the art. The dimensions and layout of the casing 100, including the position of the memory device 29, are specified for any particular type of cartridge 9. Information about the cartridge 9 and any data stored on the tape 27 can be stored in the memory device 29, for example locations of certain data blocks and storage dates, customer information, details of an application stored on the tape, remaining unused tape storage space.

The drives 3 are connected over data input/output lines 31 to data sources 32. The data sources 32 may be connected to the library's drives 3 in any convenient arrangement. For example, the data sources 32 can be directly connected to respective drives 3 for supplying data streams to the drives 3 on a one-to-one basis, with multiple drives 3 to one data source 32, or in any other suitable manner. Alternatively, the data sources 32 can be connected to the drives 3 through a switched fabric arrangement (not shown) or through the host 12.

In use, the host 12 receives a cartridge movement control request from an originating data source 32 and sends a corresponding movement control command to the library controller 13, translating logical addresses to physical addresses where necessary. If the required cartridge is not successfully located, the controller 13 may send information to the host 12 alerting it to the need to provide the required cartridge to the library 1. If a required cartridge is not in a presently available drive 3, the controller 13 selects a drive and instructs the robotics 11 to move the required cartridge 9 to a selected drive 3. In response to the robotics confirming that the cartridge 9 is correctly positioned, the host 12 sends a movement reporting signal to the originating data source 32 over the line 29. In response to receiving the confirmatory reporting signal from the host 12, the data source 32 initiates data streaming to the drive 3.

Coordination of data streaming to the drives with cartridge movement can be carried out using any convenient and suitable arrangement, many of which will be apparent to the skilled reader. For example, the data sources 32 and host 12 may be interconnected over a local area network (LAN), or by any other suitable arrangement, and at least one of the data sources 32, the host 12, some other networked device or a combination of any of these devices can control coordination of storage traffic commands.

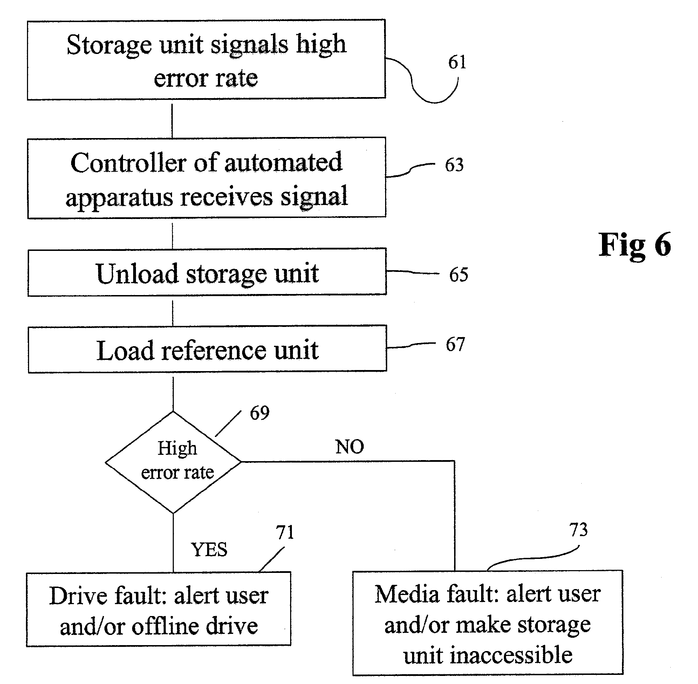

Each drive 3 operates under control of it own internal logic circuitry (not shown), or a processor (not shown) executing machine readable instructions adapted to cause the drive to operate as described below. The drive 3 monitors an error level in data transferred to or from a cartridge 9, the so-called "soft" error rate, i.e. the error rate prior to the application by the drive 3 of error correction techniques. If the error level exceeds a predetermined threshold, the drive 3 operates to inform the controller 13 of the excessive error level at the drive 3 (Figure 6, step 61). In response to receiving the information indicative of an excessive error level from a particular drive 3 (Figure 6, step 63), the library controller 13 enters an auto-diagnostic mode. In this mode, the controller 13 makes the drive 3 temporarily unavailable to the host 12 for further data transfer operations, and removes the presently inserted cartridge 9 from the drive 3 (Figure 6, step 65). The controller 13 also records details of the error level at the drive 3, if required. The controller 13 causes the robotics to temporarily store the potentially faulty cartridge 9 in a location in the holding area 5, and makes a record containing details of the location and the cartridge 9.

The controller 13 operates to cause the robotics 11 to locate a designated reference cartridge 9R constituted by a cartridge 9 that has been designated as a reference cartridge for diagnostic use as described below. A specially designated storage slot 35 is provided in the holding area 5 for holding the reference cartridge 9R. The slot is hidden in that it is not available to the library 1 for use in holding a cartridge 9 storing user data. The reference cartridge 9R has identity information stored in a designated field in the cartridge memory device 29, enabling the controller 13 and/or drives 3 to use the information to recognize the reference cartridge 9R as containing a known storage medium for diagnostic use. The reference cartridge 9R can be specially marked or configured for easy human recognition.

In alternative embodiments, the identifying information could be provided in other ways, for example by storage on the magnetic tape 27 or by a mechanical cartridge recognition system. Alternatively, the identifying information could be dispensed with, and the reference cartridge 29 could be located initially by virtue of its position in the special slot 35 and then tracked by the library controller 13 as it moves in the library 1. Also, it will be understood that in certain embodiments the special slot 35 could be dispensed with and the controller 13 could store the reference cartridge 9R in any convenient one of the holding bays 7, using the identity information to locate the reference cartridge when required.

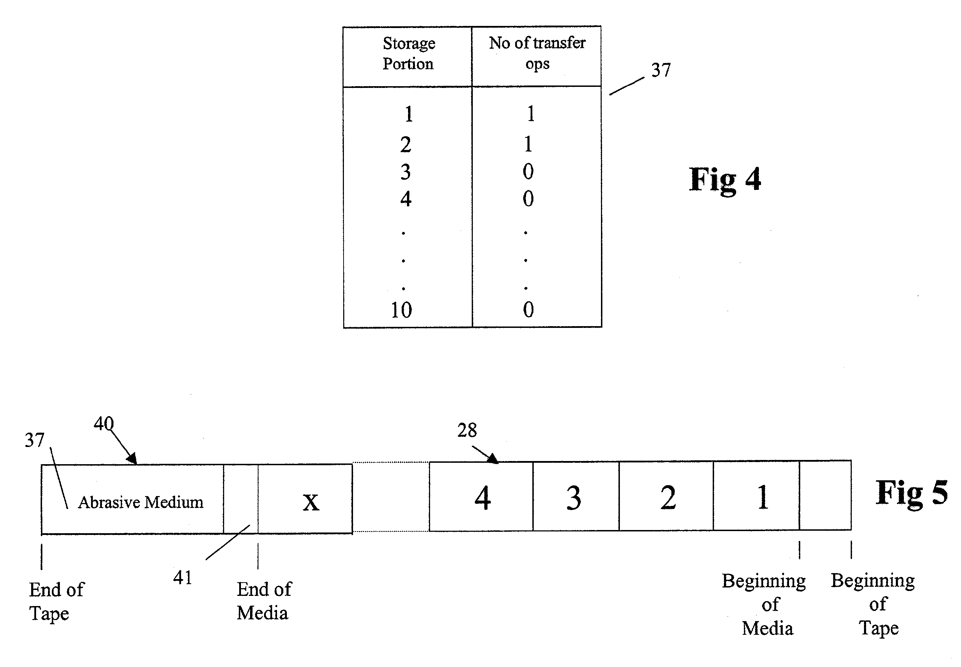

The reference cartridge 9R has a designated field in its cartridge memory device 29 for recording a history of read and/or write operations performed on at least one storage portion 28 of the magnetic tape 27. The tape 27 shown in Figure 3 is approximately 600 metres long and is notionally divided into ten storage portion 28s each about 60 metres long. However, it will be appreciated that any convenient alternative size, number and arrangement of storage portions 28 could be selected. For example, the storage portions 28 need not be contiguous as shown, and could be distributed across the tape 27. The most appropriate arrangement will depend on the particular storage technology employed. The history can be recorded in any convenient form, for example in a table 37 as shown in Figure 4, that records the number of times each storage portion 28 has been used in a read and/or write operation.

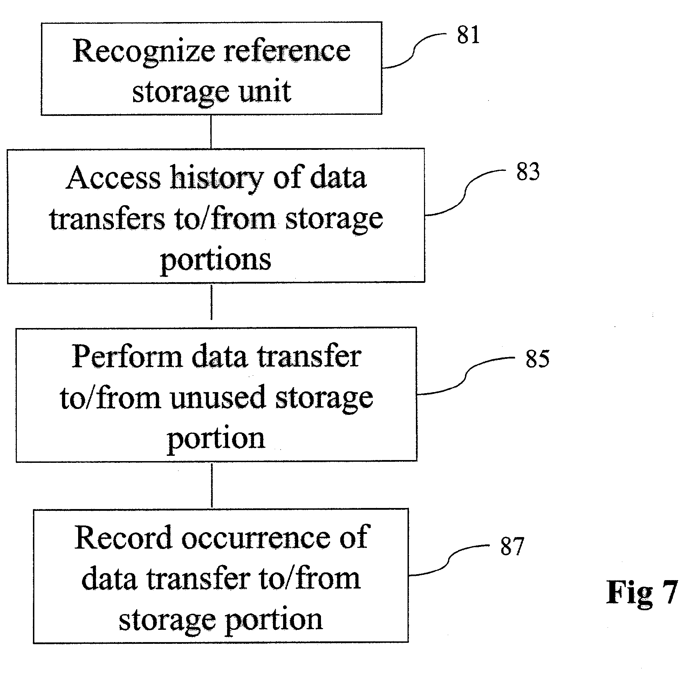

The library controller 13 causes the robotics 11 to move the reference cartridge 9R to the drive 3 experiencing the excessive error level and insert the cartridge 9R into the drive 3 (Figure 6, step 67). The drive 3 operates to communicate with the cartridge memory device 29 of the reference unit 9R. The drive 3 accesses the identity information and recognizes the drive as a reference unit (Figure 7, step 81). The drive then accesses the history table 37 (Figure 7, step 83). In an alternative embodiment, at least one of the identity information and the history table 37 are stored on a specially reserved portion of the magnetic tape 27, and the drive 3 operates to access the specially reserved portion of the tape 27 to obtain the necessary information.

The drive 3 is adapted to use the occurrence record provided by the history table 37 to enable it to carry out a reference read and/or write operation only on a storage portion 28 that has not previously been subject to a read and/or write operation (Figure 7, step 85). In this manner, only virgin tape is presented to the drive's read and/or write heads for the reference read and/or write operation. The virgin tape storage portions should be in good condition, and will not have been subject to damage caused by wear and tear occasioned by previous data transfer operations, for example scratches caused by dirt or debris on the read/write heads, or overuse. In alternative embodiments, the drive 3 could operate to allow two, or some other relatively low number of data transfer operations, per storage portion 28. After carrying out a reference data transfer operation on the selected storage portion 28, the drive operates to update the history table 37 by incrementing the table 37 against the entry for that storage portion 28 (Figure 7, step 87).

The drive 3 monitors the error level in data transferred between the drive 3 and the reference cartridge 9R (Figure 6, step 69). If the error level exceeds a predetermined threshold, the drive 3 operates as previously, to inform the controller 13 of the excessive error level at the drive 3. Alternatively, the controller 13 carries out a diagnostic operation using information obtained from the drive during the reference data transfer operation to determine whether the error level exceeds the predetermined threshold. The controller 13 automatically takes appropriate action depending on the error level of the reference data transfer operation.

An excessive error level using the reference cartridge is indicative of a fault in the drive 3, and accordingly the controller 13 takes action to, for example, provide a warning signal or message to alert a library operator that there is a fault in the drive and/or to take the drive offline and make the host aware that the drive 3 is no longer available (Figure 6, step 71). If the reference error level is not excessive, the controller 13 takes action to, for example, provide a warning signal or message to alert the library operator that the last-removed cartridge 9 is faulty or degraded, and/or provide the location of the removed cartridge 9 in the holding area 5 and/or make the faulty cartridge 9 inaccessible for further move operations except for export from the library 1 (Figure 6, step 73).

In this manner, a library operator can be informed of a fault in a specific drive 3 or cartridge 9, and/or appropriate action can be taken to mitigate the effects of the fault, without any prior involvement of the operator. This saves the operator's time and removes a need for the operator to be involved in low level data analysis.

An alternative reference cartridge 9R is identical to the cartridge 9R described above except that the magnetic tape 27 is replaced by a multi-function band 40, shown in Figure 5. The band 40 has a portion of magnetic tape 27 connected at one end to an end of a tape cleaning band 37 of abrasive tape cleaning material. The tape 27 and the band 40 are connected by a spliced joint 41. The alternative cartridge 9R carries identity information identifying it as a multi-function cartridge.

The multi-function cartridge can be used in a method as described above, except that the library 1 and drives 3 are adapted to recognize the multi-function cartridge 9R and use it as a cleaning cartridge or as a reference cartridge as required. Only one special slot 35 need be provided to hold the multi-function cartridge 9R.

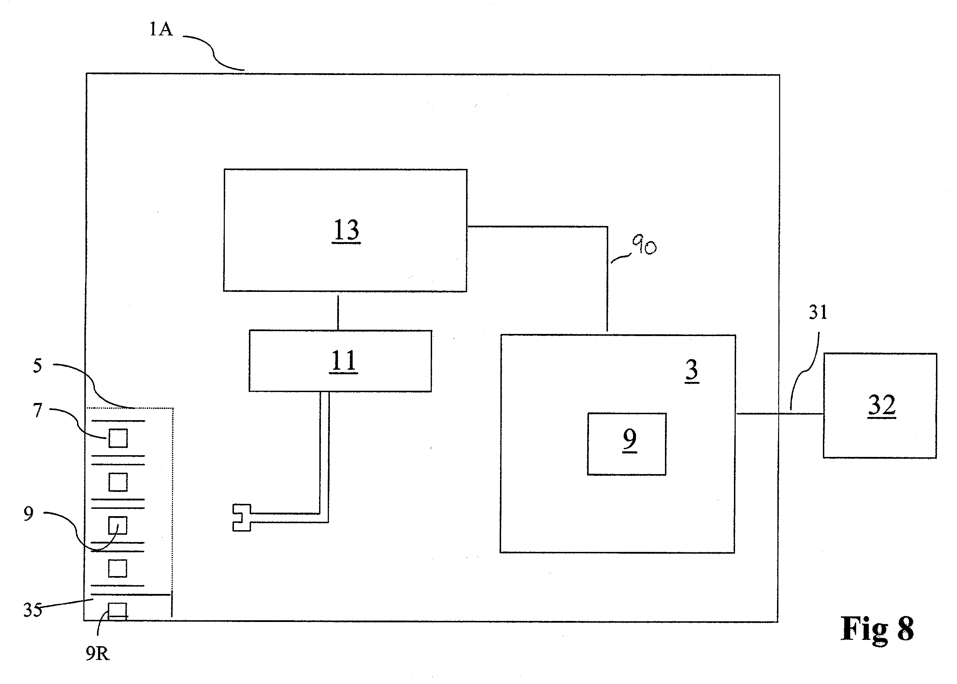

The term "library" as used herein includes autoloader devices, for example a multi-cartridge autoloader device 1A as shown in Figure 8 comprising only one drive 3. In such an autoloader device 1A, for example using "surrogate SCSI" technology, cartridge movement control commands and a data stream can be sent over the same communication path 31. The drive 3 fulfils the functions of the host 12 and passes-through cartridge movement control commands to the library controller 13. A communication connection 90 is provided between the controller 13 and drive 3 for passing commands and responses between the controller 13 and drive 3, for example a serial connection such as the aforementioned ACI or any other suitable form of connection.

Whilst the cartridge 9 and drives 3 of the present embodiment relate to linear tape technology, alternative embodiments relate to other tape technologies, for example helical scan technology such as the DDS 4 standard, wherein a write and/or read pass is made in a direction laterally of the tape 27 at an angle to the longitudinal axis of the tape 27. It will also be understood that the invention can be analogously implemented using any other suitable data storage technology, for example using optical or magnetic disc data storage units and transfer devices.

Furthermore, it will be appreciated that the controller 13 can be implemented in many alternative forms. For example, at least one of the fast access storage 17 and non-volatile storage 19 could be dispensed with or located externally of the controller 13, or the necessary storage could instead be formed integrally with the processor 15. Alternatively, the digital data processing apparatus 13 could be replaced by logic circuitry adapted to cause the library 1 to perform a method as described above. The logic circuitry could be, for example an application specific integrated circuit (ASIC), digital signal processing (DSP) chip, discrete circuit components, programmable logic array, or any other suitable circuitry.

The program executable by the processor 15 to cause the library 1 to perform the method described above can be stored on any suitable alternative carrier instead of the fast-access storage 17 carrier and the non-volatile storage 19 carrier. An alternative carrier could be formed by, for example, a magnetic disc drive (e.g. hard drive and RAID), solid state memory (e.g. ROM, EPROM, EEPROM), magnetic disc, optical disc (e.g. CD-ROM, DVD), magnetic or optical tape, wired or wireless transmission media, a digital data processor, or any other suitable signal-bearing medium.

Alternatively, at least part of the program could be executed by the host 12 and the controller 13 could receive commands from the host 12 to cause the controller 13 to perform the method described above.

At least some of the functions for performing steps of described above that are implemented by the controller 13, drives 3 or host 12 using logic circuits or machine readable instructions could equally well be implemented by another of these devices, or distributed between two or more of those devices, without departing from the scope of the invention claimed.

## Claims

1. A method of operating an automated storage apparatus comprising at least one data transfer device for transferring data to and from data storage units, a robotic device for moving said data storage units, a holding area for holding said data storage units for which no data is presently required to be transferred thereto or therefrom, and a reference data storage unit held in said holding area, the method comprising:
automatically, in response to receiving information indicative of an excessive error level in transferring data between one said data transfer device and a respective said data storage unit:
a) removing from said one data transfer device a presently inserted said data storage unit; and
b) inserting said reference unit in said one data transfer device for a reference transfer operation.

2. The method of claim 1, comprising causing a data transfer operation to be performed on a storage portion of said reference unit, said storage portion having had a controlled number of transfer operations performed thereon.

3. The method of claim 1 or 2, comprising using an error level of the reference transfer operation to determine whether a cause of said one error level exceeding said threshold lies with said one data transfer device or with said data storage unit last removed from said one data transfer device.

4. The method of any of the preceding claims, wherein said storage unit is a multi-function storage unit comprising i) a tape storage medium section having said at least one storage portion and ii) an abrasive cleaning tape section, the method further comprising holding the multi-function storage unit in a dedicated multi-function storage unit holding area, and moving said multi-function storage unit to a data transfer device for use as a cleaning unit or as a reference unit, as the case may be.

5. A program of machine readable instructions adapted to execute on a digital processor apparatus so as to cause an automated storage apparatus to perform the method of any of claims 1 to 4.

6. A carrier having stored thereon a program of machine readable instructions adapted to execute on a digital processor apparatus so as to cause an automated storage apparatus to perform the method of any of claims 1 to 4.

7. A digital processor apparatus embodying a program of machine readable instructions adapted to cause an automated storage apparatus to perform the method of any of claims 1 to 4.

8. A logic circuit of interconnected electrically conductive elements adapted to cause an automated storage apparatus to perform the method of any of claims 1 to 4.

9. An automated digital data storage apparatus for moving digital data storage units between a holding area and at least one respective data transfer device for transferring data to and from said data storage units, said apparatus being adapted to:
a) hold and locate in said holding area a said data storage unit that is designated as a reference unit for diagnostic use, said unit comprising at least one reference storage portion having had a controlled number of previous transfer operations performed thereon; and
b) automatically, in response to receiving information indicative of an excessive error level in transferring data between one said data transfer device and a respective said data storage unit:
i) remove from said one data transfer device a presently inserted said data storage unit;
ii) insert said reference unit in said one data transfer device for a reference transfer operation.

10. The automated digital data storage apparatus of claim 9, adapted to recognize, by virtue of at least one of (i) information held on said reference unit and (ii) the presence of said reference unit in a designated reference unit holding area, that a said data storage unit constitutes a said designated reference unit for diagnostic use.

11. The automated digital data storage apparatus of claim 9 or 10, adapted to monitor an error level in data transferred during said reference data transfer operation, and determine thereby whether a cause of the excessive error level is located in said one data transfer device or in the data storage unit last removed from said one data transfer device.

12. The automated digital data storage apparatus of any of claims 9 to 11, adapted to recognize a holding portion of said holding area as constituting a dedicated reference unit holding area.

13. The automated digital data storage apparatus of any of claims 9 to 12, wherein said reference unit is a multi-function storage unit comprising i) a tape storage medium section having said at least one storage portion and ii) spliced to said tape storage medium section, an abrasive cleaning tape section, said automated storage apparatus being adapted to locate the multi-function storage unit in a dedicated multi-function storage unit holding area, for moving said multi-function storage unit to a data transfer device for use as a cleaning unit or as a reference unit, as required.

14. An automated digital data storage apparatus for moving digital data storage units between a holding area and at least one respective data transfer device for transferring data to and from said data storage units, said holding area having a slot dedicated to receiving one of said storage units that is designated as a reference unit for diagnostic use, said reference unit comprising at least one reference storage portion having had a controlled number of previous transfer operations performed thereon, said apparatus being adapted to:
a) monitor an error level in data transferred between the or each said data transfer device and a respective said data storage unit;
b) automatically, in response to a said error level at one said transfer device exceeding a predetermined threshold:
i) remove from said one data transfer device a presently inserted said data storage unit; and
ii) insert in said one data transfer device said reference unit.
